(19) Europäisches Patentamt
European Patent Office
Office européen des brevets

(11) **EP 3 901 826 A2**

(12) **EUROPEAN PATENT APPLICATION**

(43) Date of publication:
**27.10.2021 Bulletin 2021/43**

(51) Int Cl.:
**G06K 9/00** (2006.01)          **G06K 9/62** (2006.01)

(21) Application number: **21194735.3**

(22) Date of filing: **03.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.11.2020 CN 202011289191**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **HAN, Fengze**
  **Beijing (CN)**
• **ZHU, Xiaohui**
  **Beijing (CN)**

(74) Representative: **J A Kemp LLP**
**80 Turmill Street**
**London EC1M 5QU (GB)**

(54) **VEHICLE POSITION DETERMINING METHOD, APPARATUS AND ELECTRONIC DEVICE**

(57)     The present application discloses a vehicle position determining method, an apparatus, an electronic device, and relates to the technical fields of artificial intelligence, automatic driving, intelligent transportation and computer vision. A specific implementation scheme is: acquiring a current position of a vehicle to be positioned and characteristic information of a road ahead of the current position when determining the road where the vehicle is located in; and determining at least one road in a preset area including the current position in a navigation map; determining a probability that the vehicle to be positioned is located in each lane of each road according to the characteristic information of the road ahead; and determining a target road where the vehicle to be positioned is located in according to the probability of each lane. In this way, the target road where the vehicle to be positioned is located in is determined according to a lane-level probability distribution, which can improve accuracy of positioning to a certain extent and solve a problem in the prior art that the road where the vehicle is currently located in cannot be determined, thereby accurately providing assistance for users to travel.

Acquire a current position of a vehicle to be positioned and characteristic information of a road ahead of the current position; where the characteristic information includes a number of lane lines, a type of each lane line, and a relative position relationship between the vehicle to be positioned and each lane line — S201

Determine at least one road in a preset area including the current position in a navigation map — S202

Determine a probability that the vehicle to be positioned is located in each lane of each road according to the characteristic information of the road ahead — S203

Determine a target road where the vehicle to be positioned is located in according to the probability that the vehicle to be positioned is located in each lane of each road — S204

FIG. 2

## Description

## TECHNICAL FIELD

The present application relates to the technical field of computer technology, in particular, to a vehicle position determining method, an apparatus and an electronic device, which can be specifically applied in technical fields of artificial intelligence, automatic driving, intelligent transportation and computer vision.

## BACKGROUND

A navigation map (SD Map) is a map widely used in fields of coarse-grained road positioning of pedestrians and vehicles, route planning and navigation, etc.. The positioning principle of the navigation map is: determining a current road where a vehicle is located in according to a distance between a current position positioned by a global positioning system (GPS) and a center line of an adjacent road found in a navigation map, and a difference between a heading angle of a vehicle body and a heading angle of the adjacent road.

However, in the actual scenario, due to the complexity of the navigation map road network, especially in the scenario of multiple parallel roads, if distances between the vehicle and center lines of two roads are the same, the current road where the vehicle is located in cannot be determined, and thus it is impossible to accurately provide assistance for users to travel.

## SUMMARY

The present application provides a vehicle position determining method, an apparatus and an electronic device, which can improve accuracy of positioning to a certain extent and solve the problem in the prior art that that the road where the vehicle is currently located in cannot be determined, thereby accurately providing assistance for users to travel.

According to an aspect of the present application, there is provided a vehicle position determining method, including:

acquiring a current position of a vehicle to be positioned and characteristic information of a road ahead of the current position; where the characteristic information includes a number of lane lines, a type of each lane line, and a relative position relationship between the vehicle to be positioned and each lane line;

determining at least one road in a preset area including the current position in a navigation map;

determining a probability that the vehicle to be positioned is located in each lane of each road according to the characteristic information of the road ahead; and

determining a target road where the vehicle to be positioned is located in according to the probability that the vehicle to be positioned is located in each lane of each road.

According to another aspect of the present application, there is provided a vehicle position determining apparatus, which may include:

an acquiring module, configured to acquire a current position of a vehicle to be positioned and characteristic information of a road ahead of the current position; where the characteristic information includes a number of lane lines, a type of each lane line, and a relative position relationship between the vehicle to be positioned and each lane line; and

a processing module, configured to determine at least one road in a preset area including the current position in a navigation map; determine a probability that the vehicle to be positioned is located in each lane of each road according to the characteristic information of the road ahead; and determine a target road where the vehicle to be positioned is located in according to the probability that the vehicle to be positioned is located in each lane of each road.

According to another aspect of the present application, there is provided an electronic device, including:

at least one processor; and

a memory communicatively connected to the at least one processor; where,

the memory stores with instructions executable by the at least one processor, and the instructions are executed by the at least one processor to enable the at least one processor to execute the vehicle position determining method according to the first aspect mentioned above.

According to another aspect of the present application, there is provided a non-transitory computer readable storage medium storing with computer instructions, where the computer instructions are used to cause a computer to execute the vehicle position determining method according to the first aspect mentioned above.

According to another aspect of the present application, a computer program product is provided, including: a computer program, where the computer program is stored in a readable storage medium, at least one processor of an electronic device can read the computer program from the readable storage medium, and the at least one processor executes the computer program to enable the electronic device to execute the vehicle position determining method according to the first aspect mentioned above.

The technical solution of the present application, by acquiring a current position of a vehicle to be positioned and characteristic information of a road ahead of the current position; where the characteristic information includes a number of lane lines, a type of each lane line, and a relative position relationship between the vehicle to be positioned and each lane line; determining at least one road in a preset area including the current position in a navigation map; determining a probability that the vehicle to be positioned is located in each lane of each road according to the characteristic information of the road ahead; and determining a target road where the vehicle to be positioned is located in according to the probability that the vehicle to be positioned is located in each lane of each road, determines the target road where the vehicle to be positioned is located in according to a lane-level probability distribution, which can improve accuracy of positioning to a certain extent and solve a problem in the prior art that the road where the vehicle is currently located in cannot be determined, thereby accurately providing assistance for users to travel.

It should be understood that what is described in this section is not intended to identify key or important features of embodiments of the present application, nor is it intended to limit the scope of the present application. Other features of the present application will become easy to understand from the following description.

## BRIEF DESCRIPTION OF DRAWINGS

The appended drawings are for better understanding of the solution and do not constitute a limitation of the present application, where:

FIG. 1 is a schematic diagram of a parallel road scenario provided by an embodiment of the present application;
FIG. 2 is a flow diagram of a vehicle position determining method according to a first embodiment of the present application;
FIG. 3 is a schematic diagram of the road ahead provided according to the first embodiment of the present application;
FIG. 4 is a schematic diagram of at least one road in the preset area provided according to the first embodiment of the present application;
FIG. 5 is a structural diagram of a vehicle position determining apparatus according to a second embodiment of the present application; and
FIG. 6 is a block diagram of an electronic device for a vehicle position determining method according to an embodiment of the present application.

## BRIEF DESCRIPTION OF EMBODIMENTS

Illustrative embodiments of the present application are described below with reference to the appended drawings, including various details of the embodiments of the present application to help understanding, which should be considered as merely illustrative. Therefore, it should be recognized by those of ordinary skill in the art that various changes and modifications can be made to the embodiments described herein without departing from the scope of the present application. Also, for the sake of clarity and conciseness, descriptions of commonly-known functions and structures are omitted in the following description.

In the embodiments of the present application, "at least one" refers to one or more, and "multiple" refers to two or more. "and/or" describes an association relationship of associated objects, representing that there can be three kinds of relationships, for example A and/or B may represent that A exists alone, A and B exist at the same time, and B exists alone, where A and B can be singular or plural. In the text description of the present application, the character "/" generally indicates that the contextual objects are in a relationship of "or".

The vehicle position determining method provided by the embodiment of the present application can be applied in a vehicle navigation system based on a navigation map. The navigation map is a map widely used in fields of coarse-grained road positioning of pedestrians and vehicles, route planning and navigation, etc.. The navigation map (SD Map) is different from a high-precision map. The high-precision map includes abundant lane information, such as lane color, the number of lane lines, types of the lane lines and width of lanes. However, the information included in the navigation map is relatively simple, including only the number of lanes. In the vehicle navigation system based on the navigation map, when a vehicle positioning device provides navigation tips according to a road where the vehicle is currently located in, it needs to first locate the current position of the vehicle by the GPS of the vehicle, and determine the road where the vehicle is currently located in according to a distance between the current position positioned by the GPS and a center line of an adjacent road found in the navigation map, and a difference between a heading angle of a vehicle body and a heading angle of the adjacent road. Only after the road where the vehicle is currently located in is determined, accurate navigation tips can be provided based on the navigation map, for example, driving to the front-left at a first traffic light in front, or driving to the front-right at a first traffic light in front, etc., thus providing assistance for users to travel.

However, in the actual scenario, due to the complexity of a navigation map road network, especially in the scenario of multiple parallel roads, due to an error in longitude and latitude information positioned by the GPS, distances between the vehicle position positioned by the longitude and latitude information and center lines of two roads therein are the same. If the distances between the vehicle position and the center lines of two roads are the same, the current road where the vehicle is located in cannot be determined, and thus it is impossible to accurately provide assistance for users to travel.

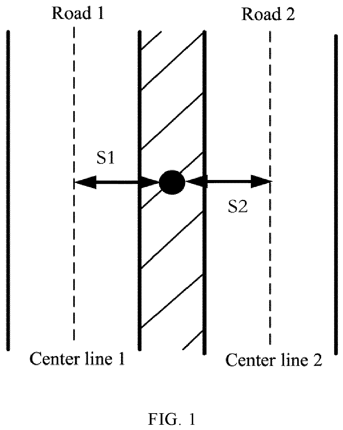

For example, in the scenario of multiple parallel roads, referring to FIG.1, which is a schematic diagram of a parallel road scene provided by an embodiment of the present application. The parallel road scenario includes parallel roads 1 and 2. Due to the error of the longitude and latitude information positioned by the GPS, the position of the vehicle positioned by the longitude and latitude information is in a green belt between the roads 1 and 2. And a distance S1 between the vehicle position and a center line 1 of road 1 and a distance S2 between the currently located vehicle position and a center line 2 of road 2 are approximately equal. In this case, it cannot be determined that which road of road 1 and road 2 the vehicle is currently located in, and thus the assistance for users to travel cannot be accurately provided.

In order to accurately determine the road where the vehicle is currently located in to a certain extent, so as to solve the problem in the prior art that the road where the vehicle is currently located in cannot be determined, it can be considered to determine the current road where the vehicle is currently located in by the number of lanes in the current navigation map. When the road where the vehicle is currently located in is determined by the number of lanes in the current navigation map, if the determined current road where the vehicle is located in is accurate, the number of lane lines on the road where the vehicle is driving matches the number of lane lines on the road in the navigation map, and the position relationship between the vehicle and the lane lines also matches, for example, there is one lane line on the left side and two lane lines on the right side of the vehicle. According to matching results, a probability that the vehicle is located in each lane of each road can be calculated, and then the road where the vehicle is located in can be determined according to the probability that the vehicle is located in each lane of each road, which can improve accuracy of positioning to a certain extent and solve the problem in the prior art that that the road where the vehicle is currently located in cannot be determined, thereby accurately providing assistance for users to travel.

Based on the idea above, the present application provides a vehicle position determining method, which can first acquire a current position of a vehicle to be positioned and characteristic information of a road ahead of the current position; where the characteristic information includes a number of lane lines, a type of each lane line, and a relative position relationship between the vehicle to be positioned and each lane line; determine at least one road in a preset area including the current position in a navigation map; determine a probability that the vehicle to be positioned is located in each lane of each road according to the characteristic information of the road ahead; and determine a target road where the vehicle to be positioned is located in according to the probability that the vehicle to be positioned is located in each lane of each road.

It can be understood that the type of the lane line can include road-edge line type and non-road-edge line type. A road-edge line of the road-edge line type can be used as a matching reference to help determine the target road where the vehicle is located in. A relative position relationship between the vehicle and the lane line refers to that the lane line is on the left side of the vehicle or on the right side of the vehicle.

Illustratively, the preset area can be a circular area, for example, the preset area can be a circular area with the current position as a circle center and a preset length as a radius; or, the preset area can also be a rectangular area, for example, the preset area can be a rectangular area with the current position as a center point and a preset length as a diagonal line; or, the preset area can be an irregular area including the current position, which can be set according to actual needs.

In the embodiments of the present application, the reason for setting the preset area and determining at least one road in the preset area including the current position in the navigation map is that although GPS positioning will have errors, its error range is limited, so it is not necessary to screen each road one by one in the roads in a large area to determine the current road where the vehicle is located in, but only need to determine the current road where the vehicle is located in in the roads in the preset area including the current position, which can effectively reduce the amount of data processing, thereby improving the processing efficiency.

It can be seen that, the embodiments of the present application, by acquiring a current position of a vehicle to be positioned and characteristic information of a road ahead of the current position; where the characteristic information includes a number of lane lines, a type of each lane line, and a relative position relationship between the vehicle to be positioned and each lane line; determining at least one road in a preset area including the current position in a navigation map; determining a probability that the vehicle to be positioned is located in each lane of each road according to the characteristic information of the road ahead; and determining a target road where the vehicle to be positioned is located in according to the probability that the vehicle to be positioned is located in each lane of each road, determine the target road where the vehicle to be positioned is located in according to a lane-level probability distribution, which can improve accuracy of positioning to a certain extent and solve a problem in the prior art that the road where the vehicle is currently located in cannot be determined, thereby accurately providing assistance for users to travel.

In the following, the vehicle position determining method provided by the present application will be illustrated in detail through specific embodiments. It can be understood that the following specific embodiments can be combined with each other, and the same or similar concepts or processes may not be repeated in some embodiments.

Embodiment 1

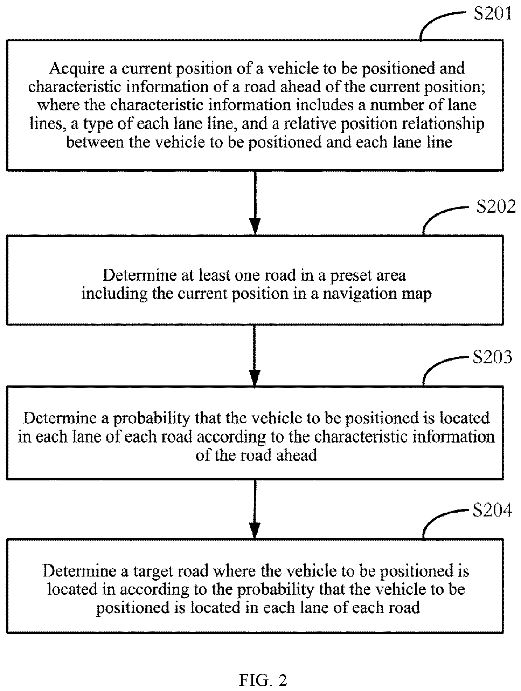

FIG. 2 is a flow diagram of the vehicle position determining method according to a first embodiment of the present application, the vehicle position determining method can be executed by software and/or hardware apparatuses, for example, the hardware apparatus can be a vehicle position determining device, which can be a terminal or a server. Illustratively, as shown in FIG. 2, the vehicle position determining method may include:

S201, acquire a current position of a vehicle to be positioned and characteristic information of a road ahead of the current position.

The current position of the vehicle to be positioned can be represented by information of longitude and latitude where the vehicle to be positioned is currently located in, the characteristic information includes a number of lane lines, a type of each lane line, and a relative position relationship between the vehicle to be positioned and each lane line. It can be understood that the road ahead refers to a road ahead a driving direction of the vehicle to be positioned at the current position.

For example, when obtaining the current position of the vehicle to be positioned, the current position of the vehicle to be positioned can be acquired by the GPS set by the vehicle itself; the current position of the vehicle to be positioned can also be acquired by collecting image information ahead of the vehicle through a camera and performing image matching, or by other means, which can be set according to actual needs. Here, the embodiment of the present application only takes acquiring the current position of the vehicle to be positioned by the GPS set by the vehicle itself as an example, but it does not mean that the embodiment of the present application is limited to this.

For example, when acquiring the characteristic information of the road ahead of the current position, a vision sensor can be installed in front of the vehicle to be positioned in advance, and the characteristic information of the road ahead can be collected by the vision sensor. A collection result fed back by the vision sensor includes characteristic information of the road ahead, including the number of the lane lines included in the road ahead, the type of each lane line, and the relative position relationship between the vehicle to be positioned and each lane line.

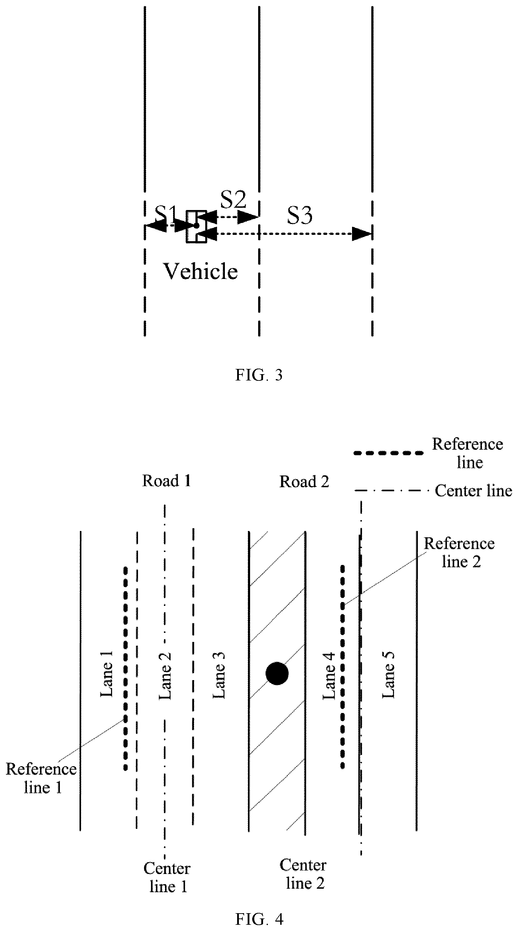

For example, referring to FIG. 3, FIG. 3 is a schematic diagram of the road ahead provided by the first embodiment of the present application. First, the longitude and latitude information of the current position where the vehicle is located in can be acquired by the GPS in the vehicle to be positioned, and the current position of the vehicle to be positioned can be determined according to the longitude and latitude information, and the number of the lane lines included in the road ahead of the current position, the type of each lane line, and the relative position relationship between the vehicle to be positioned and each lane line are detected by the visual sensor installed on the vehicle to be positioned. Referring to FIG. 3, it can be seen that the visual sensor detects that the road ahead includes three lane lines and their types of lane lines, and the relative position relationship between the vehicle to be positioned and the three lane lines is as follows: the leftmost lane line is on the left side of the vehicle, the middle lane line and the rightmost lane line are on the right side of the vehicle. It can be understood that the three lane lines may be all lane lines in the current road of the vehicle, and may also be part of lane lines.

After the current position of the vehicle to be positioned is acquired by the GPS, at least one road in the preset area including the current position can be searched and determined in the navigation map, that is, the following S202 is executed, so that the road where the vehicle to be positioned is currently located in is determined among the at least one road.

S202, determine at least one road in a preset area including the current position in a navigation map.

The number of at least one can be one or more, which can be set according to actual needs. Here, the value of at least one is not further limited by the embodiment of the present application.

Illustratively, the preset area can be a circular area, for example, the preset area can be a circular area with the current position as a circle center and a preset length as a radius; or, the preset area can also be a rectangular area, for example, the preset area can be a rectangular area with the current position as a center point and a preset length as a diagonal line; or, the preset area can be an irregular area including the current position, which can be set according to actual needs.

After the longitude and latitude information of the current position where the vehicle is located in is acquired by the GPS in the vehicle to be positioned and the current position of the vehicle to be positioned is determined according to the longitude and latitude information, at least one road in the preset area including the current position can be determined in the navigation map. For example, at least one road in a preset radius area can be determined with the longitude and latitude information as the circle center, which can be shown in reference with FIG. 4, which is a schematic diagram of at least one road in the preset area provided according to the first embodiment of the present application. It is assumed that the road determined in the preset area including the current position in the navigation map include road 1 and road 2 shown in FIG. 4 , road 1 includes four lane lines, the leftmost lane line and the rightmost lane line are road-edge lines, the middle two lane lines are non-road-edge lines, and the four lane lines form three lanes, which are lane 1, lane 2 and lane 3 in turn from left to right; road 2 includes three lane lines, the leftmost lane line and the rightmost lane line are road-edge lines, and the middle one is a non-road-edge line, the three lines form two lanes, which are lane 4 and lane 5 in turn from left to right.

After the at least one road in the preset area including the current position is determined in the navigation map, the road where the vehicle to be positioned is located in can be determined according to the characteristic information of the road ahead, that is, the following S203-S204 are executed.

S203, determine a probability that the vehicle to be positioned is located in each lane of each road according to the characteristic information of the road ahead.

Illustratively, a probability that the vehicle to be positioned is located in each lane of each road according to the characteristic information of the road ahead may include at least two possible implementations.

In a possible implementation, if the types of the lane lines included in the characteristic information of the road ahead are all non-road-edge line type, it means that there is no road-edge line in the road ahead that can be taken as a reference for distance matching. Therefore, in this possible implementation, lane line matching only needs to be performed according to the number of the lane lines and the relative position relationship between the vehicle to be positioned and each lane line, so as to obtain a first probability that the vehicle to be positioned is located in each lane of each road, and determine the first probability as the probability that the vehicle to be positioned is located in each lane of each road.

In another possible implementation, if a type of a lane line in the types of the lane lines included in the characteristic information of the road ahead is a road-edge line type, it means that there exists a road-edge line in the road ahead that can be taken as the reference for distance matching. Therefore, in this possible implementation, the characteristic information further includes a distance between the vehicle to be positioned and the road-edge line, lane line matching can be performed first according to the number of the lane lines and the relative position relationship between the vehicle to be positioned and each lane line, so as to obtain a first probability that the vehicle to be positioned is located in each lane of each road, determine a second probability that the vehicle to be positioned is located in each lane of each road according to the distance between the vehicle to be positioned and the road-edge line, and determine the probability that the vehicle to be positioned is located in each lane of each road according to the first probability and the second probability collectively.

Illustratively, when the probability that the vehicle to be positioned is located in each lane of each road is determined according to the first probability and the second probability collectively, the probability that the vehicle to be positioned is located in each lane of each road can be determined by consecutive observation, which can be specifically referred to in the following equation 1:

$$l_t = l_{t-1} + \log \frac{p(x \mid z_t)}{1 - p(x \mid z_t)} - \log \frac{p(x)}{1 - p(x)}$$

Equation 1

where $L_0 = \log(p(x)/1-p(x))$, $p(x)$ is a prior probability distribution of lane x, x represents a vector composed of all lanes, $P(x \mid z_t)$ includes the first probability and the second probability obtained by different observations at the same moment t, $z_t$ is an observation vector at the current moment, and $l_t$ is recursively estimated with the introduction of new observation vectors $z_t$. A posterior probability distribution $p(x \mid z1:t)$ can be obtained by inverse transformation of $l_t(x)$, where $P(x|z1:t)$ refers to the probability that the vehicle to be positioned is located in the road x after observation from moment 1 to moment t. For example, in an initial state, there are four lanes on the road. Without any observation z, it can be considered that

$$p(x0)=p(x1)=p(x2)=p(x3)=1/4=0.25.$$

Further referring to FIG. 3 and FIG. 4, when the probability that the vehicle to be positioned is located in each lane of each road shown in FIG. 4 is determined according to the characteristic information of the road ahead shown in FIG. 3, in a possible implementation, it is assumed that all the three lane lines shown in FIG. 3 are non-road-edge line type, which indicates that there is no road-edge line in the road ahead that can be taken as the reference for distance matching. Therefore, in this possible implementation, the probability that the vehicle to be positioned is located in each road of road 1 and road 2 shown in FIG. 4 can be determined only according to the number of the lane lines. The specific process is as follows: the left side of the vehicle to be positioned shown in FIG. 3 has a lane line and the right side thereof has two lane lines; when matching the number of the lane lines, since the fact that lane 1 in road 1 shown in FIG. 4 has one lane line on the left side and two lane lines on the right side matches the relative position relationship between the vehicle to be positioned and the lane line shown in FIG. 3, which indicates that the probability that the vehicle to be positioned may be currently located in lane 1 is high, so the first probability that the vehicle to be positioned is located in lane 1 can be determined; similarly, since the fact that lane 2 in road 1 shown in FIG. 4 also has one lane line on the left side and two lane lines on the right side matches the relative position relationship between the vehicle to be positioned and the lane line shown in FIG. 3, which indicates that the probability that the vehicle to be positioned may be currently located in lane 2 is high, the first probability that the vehicle to be positioned is located in lane 2 can be determined; since the fact that lane 3 in road 1 shown in FIG. 4 has one lane line on the left side, but only one lane line on the right side does not match the relative position relationship between the vehicle to be positioned and the lane line shown in FIG. 3, which indicates that the probability that the vehicle to be positioned may be currently located in lane 3 is small, and the first probability that the vehicle to be positioned is located in lane 3 can also be determined; and the first probability that the vehicle to be positioned is located in lane 1 and the first probability that the vehicle to be positioned is located in lane 2 are both larger than the first probability that the vehicle to be positioned is located in lane 3; the first probability that the vehicle to be positioned is located in lane 4 of road 2 shown in FIG. 4 and the first probability that the vehicle to be positioned is located in lane 5 of road 2 can be determined respectively using a similar method.

After the first probability that the vehicle to be positioned is located in lane 1 of road 1, the first probability that the vehicle to be positioned is located in lane 2 of road 1, the first probability that the vehicle to be positioned is located in lane 3 of road 1, the first probability that the vehicle to be positioned is located in lane 4 of road 2 and the first probability that the vehicle to be positioned is located in lane 5 of road 2 are determined respectively, since the three lane lines shown in FIG. 3 are all non-road-edge line type, it means that there is no road-edge line in the road ahead that can be taken as the reference for distance matching. Therefore, in this possible implementation, the calculated first probability that the vehicle to be positioned is located in lane 1 of road 1 shown in FIG. 4 can be directly determined as the probability that the vehicle to be positioned is located in lane 1 of road 1; the calculated first probability that the vehicle to be positioned is located in lane 2 of road 1 can be directly determined as the probability that the vehicle to be positioned is located in lane 2 of road 1; the calculated first probability that the vehicle to be positioned is located in lane 3 of road 1 can be directly determined as the probability that the vehicle to be positioned is located in lane 3 of road 1; the calculated first probability that the vehicle to be positioned is located in lane 4 of road 2 can be directly determined as the probability that the vehicle to be positioned is located in lane 4 of road 2; the calculated first probability that the vehicle to be positioned is located in lane 5 of road 2 can be directly determined as the probability that the vehicle to be positioned is located in lane 5 of road 2, thus the probability that the vehicle to be positioned is located in each lane of each road of road 1 and road 2 shown in FIG. 4 is obtained.

Further referring to FIG. 3 and FIG. 4, in another possible implementation, it is assumed that there is a lane line among the three lane lines shown in FIG. 3 that is the road-edge line type, for example, the leftmost lane line among the three lane lines is a road-edge line, and the other two are non-road-edge lines, since the road-edge line is included, which indicates that there is a road-edge line in the road ahead that can be used as the reference for distance matching, therefore, in this possible implementation, on the basis of matching the number of lane lines, and further in combination of the distance matching between the vehicle to be positioned and the road-edge line, the probability that the vehicle to be positioned is located in each road of road 1 and road 2 shown in FIG. 4 can be collectively determined. The specific process is as follows: first, calculating the first probability that the vehicle to be positioned is located in each lane of road 1 and road 2 shown in FIG. 4. It can be understood that when calculating the first probability that the vehicle to be positioned is located in each lane of road 1 and road 2 shown in FIG. 4, its calculation method is the same as the calculating the first probability that the vehicle to be positioned is located in each lane of road 1 and road 2 shown in FIG. 4 in the above possible implementation, which can be referred to the related description of the calculation method for calculating the first probability that the vehicle to be positioned is located in each lane of road 1 and road 2 shown in FIG. 4, so as to determine the first probability that the vehicle to be positioned is located in lane 1 of road 1, the first probability that the vehicle to be positioned is located in lane 2 of road 1, the first probability that the vehicle to be positioned is located in lane 3 of road 1, the first probability that the vehicle to be positioned is located in lane 4 of road 2 and the first probability that the vehicle to be positioned is located in lane 5 of road 2.

After the first probability that the vehicle to be positioned is located in each lane of road 1 and road 2 shown in FIG. 4 is determined, since there is a road-edge line in the three lane lines shown in FIG. 3, which indicates that there exist a road-edge line in the road ahead that can be used as the reference for distance matching, therefore, in this possible implementation, since an intercept between the vehicle to be positioned and the leftmost road-edge line shown in FIG. 3 is S1, and S1 is less than a width of a standard lane line, and since the left lane line of lane 1 in road 1 shown in FIG. 4 is a road-edge line, the width of lane 1 of road 1 shown in FIG. 4 satisfies the distance relationship between the vehicle and the road-edge line shown in FIG. 3, which indicates that the probability that the vehicle to be positioned may be currently located in lane 1 is high, then a second probability that the vehicle to be positioned is located in lane 1 can be determined, and at the same time, second probabilities that the vehicle to be positioned is located in lane 2 and lane 3 of road 1 respectively can also be determined. Similarly, since the left lane line of lane 4 of road 2 shown in FIG. 4 is a road-edge line, therefore the width of lane 4 in road 2 shown in FIG. 4 also satisfies the distance relationship between the vehicle and the road-edge line shown in FIG. 3, which indicates that the probability that the vehicle to be positioned may be currently located in lane 4 is high, so a second probability that vehicle to be positioned is located in lane 4 can be determined, and at the same time, a second probability that the vehicle to be positioned is located in lane 5 in road 2 can also be determined.

When determining the second probability that the vehicle to be positioned is located in each lane of road 1 and road 2 shown in FIG. 4, it is only illustrated by taking three lane lines including the leftmost road-edge line as an example, it can be understood that if the rightmost lane line among the three lane lines is also a road-edge line, for each lane of road 1 and road 2, based on that an intercept between the vehicle to be positioned and the rightmost road-edge line shown in FIG. 3 is S3, another group of second probabilities can also be calculated. In this case, when determining the final second probability that the vehicle to be positioned is located in each lane of road 1 and road 2, the final second probability that the vehicle to be positioned is located in each lane of road 1 and road 2 can be determined according to two second probabilities that the vehicle to be positioned is located in each lane of road 1 and road 2.

After the first probability and the second probability that the vehicle to be positioned is located in each lane of road 1 and road 2 shown in FIG. 4 is determined, for each lane of road 1 and road 2, lane 1 in road 1 is taken as an example, the probability that the vehicle to be positioned is located in lane 1 in road 1 can be determined according to the first probability that the vehicle to be positioned is located in lane 1 of road 1 shown in FIG. 4 and the second probability that the vehicle to be positioned is located in lane 1 collectively, thus obtaining the probability that the vehicle to be positioned is located in each lane of road 1 and road 2.

After the probability that the vehicle to be positioned is located in each lane of each road is acquired, the target road where the vehicle to be positioned is located in can be determined according to the probability that the vehicle to be positioned is located in each lane of each road, that is, the following S204 is executed. In this way, the target road where the vehicle to be positioned is located in is determined according to a lane-level probability distribution, which can improve accuracy of positioning to a certain extent and solve a problem in the prior art that the road where the vehicle is currently located in cannot be determined, thereby accurately providing assistance for users to travel.

S204, determine a target road where the vehicle to be positioned is located in according to the probability that the vehicle to be positioned is located in each lane of each road.

Illustratively, when determining a target road where the vehicle to be positioned is located in according to the probability that the vehicle to be positioned is located in each lane of each road, similar to that in the prior art, the probability that the vehicle to be positioned is located in each road is also determined according to a distance between the current position of the vehicle to be positioned and each reference line of each road, and an angle difference between a heading angle of a body of the vehicle to be positioned and a heading angle of each road; then, a road corresponding to a maximum probability among the probabilities of the road where the vehicle to be positioned is located in is determined; and the road corresponding to the maximum probability is determined as the target road where the vehicle to be positioned is located in, so as to determine the target road where the vehicle to be positioned is currently located in. However, unlike the prior art, in the embodiment of the present application, instead of directly taking the center line of each road as the reference line in the road, the reference line in each road is calculated and determined according to the probability that the vehicle to be positioned is located in each lane of each road.

When calculating the heading angle of each road, since the navigation map will provide information of latitude and longitude of a series of sample point and the number of lanes of the center line of the map road, the heading angle of each road can be calculated and obtained by latitude and longitude of the series of sample point and the number of lanes, which can be described through heading angle of the road theta=arctan(dy/dx), where dy represents a moving distance towards north and dx represents a moving distance towards east. When determining the heading angle of the vehicle itself, the heading angle of the vehicle itself can be calculated and obtained based on a position track acquired by the GPS and by adopting similar principles.

Illustratively, when determining the reference line in each road according to the probability that the vehicle to be positioned is located in each lane of each road, an eigenvalue of a left lane line of each lane is determined, where the eigenvalue is used to identify the left lane line. Taking 3 lanes as an example, an eigenvalue of the left lane line of the first lane can be 0, an eigenvalue of the left lane line of the second lane can be 1, an eigenvalue of the left lane line of the third lane can be 2, etc.. A product of the eigenvalue of the left lane line of each lane and the probability that the vehicle to be positioned is located in each lane of each road is calculated respectively, and a sum of the products is calculated. For each road, by taking a leftmost lane line of the road as a reference, a parallel line having a first distance to the leftmost lane line as the reference line is determined, where the first distance is determined according to a sum of the products.

With the related description of FIG. 3 and FIG. 4 in S203, when determining the reference lines of road 1 and lane 2 according to the probability that the vehicle to be positioned is located in each lane of road 1 and road 2 shown in FIG. 4, for road 1 shown in FIG. 4, it is assumed that an eigenvalue of the left lane line of lane 1 in road 1 is 0, an eigenvalue of the left lane line of lane 2 is 1 and an eigenvalue of the left lane line of lane 3 is 2, and it is calculated and obtained in S203 that the probability that the vehicle to be positioned is located in lane 1 is 0.4, the probability that the vehicle to be positioned is located in lane 2 is 0.4 and the probability that the vehicle to be positioned is located in lane 3 is 0.2, a product of the eigenvalue of the left lane line of each lane and the probability that the vehicle to be positioned is located in each lane of each road is calculated respectively, and a sum of the products is calculated, that is, it is calculated that $0 * 0.4 + 1 * 0.4 + 2 * 0.2 = 0.8$; then a product of 0.8*standard lane width 3.75 is calculated, and the product is 3, then the leftmost lane line in road 1 is taken as a reference, and a parallel line with a distance of 3 meters from the leftmost lane line is determined as the reference line 1 in road 1, therefore the reference the line 1 in road 1 is determined. Similarly, for road 2 shown in FIG. 4, it is assumed that an eigenvalue of the left lane line of lane 4 in road 2 is 0, and an eigenvalue of the left lane line of lane 5 is 1, and it is calculated and obtained in S203 that the probability that the vehicle to be positioned is located in lane 4 is 0.6, and the probability that the vehicle to be positioned is located in lane 5 is 0.4, a product of the eigenvalue of the left lane line of each lane and the probability that the vehicle to be positioned is located in each lane of each road is calculated respectively, and a sum of the products is calculated, that is, it is calculated that $0 * 0.6 + 1 * 0.4 = 0.4$; then a product of 0.4*standard lane width 3.75 is calculated, and the product is 1.5, then the leftmost lane line in road 2 is taken as a reference, and a parallel line with a distance of 1.5 meters from the leftmost lane line is determined as the reference line 2 in road 2, therefore the reference line 2 in road 2 is determined.

After the reference lines in road 1 and road 2 are determined respectively, the probability that the vehicle to be positioned is located in road 1 can be determined according to the distance between the current position of the vehicle to be positioned and the reference line 1 in road 1, and the angle difference between the heading angle of the body of the vehicle to be positioned and the heading angle of each road; and the probability that the vehicle to be positioned is located in road 2 can be determined according to the distance between the current position of the vehicle to be positioned and the reference line 2 in road 2, and the angle difference between the heading angle of the body of the vehicle to be positioned and the heading angle of each road; then a larger probability is determined between the two probabilities. It is assumed that the probability that the vehicle to be positioned is located in road 1 is greater than the probability that the vehicle to be positioned is located in road 2, road 1 is determined as the target road where the vehicle to be positioned is currently located in.

It can be seen that, the embodiment of the present application, by acquiring a current position of a vehicle to be positioned and characteristic information of a road ahead of the current position; where the characteristic information includes a number of lane lines, a type of each lane line, and a relative position relationship between the vehicle to be positioned and each lane line; determining at least one road in a preset area including the current position in a navigation map; determining a probability that the vehicle to be positioned is located in each lane of each road according to the characteristic information of the road ahead; and determining a target road where the vehicle to be positioned is located in according to the probability that the vehicle to be positioned is located in each lane of each road, improves accuracy of positioning to a certain extent and solves a problem in the prior art that the road where the vehicle is currently located in cannot be determined, thereby accurately providing assistance for users to travel.

Embodiment 2

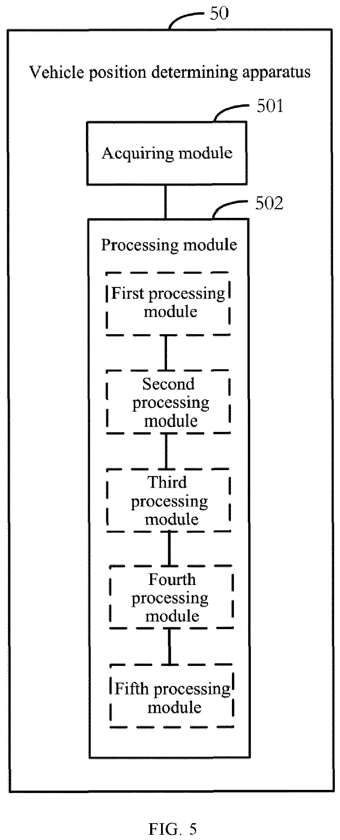

FIG. 5 is a structural diagram of a vehicle position determining apparatus 50 according to a second embodiment of the present application. Illustratively, referring to FIG. 5, the vehicle position determining apparatus 50 can include:

an acquiring module 501, configured to acquire a current position of a vehicle to be positioned and characteristic information of a road ahead of the current position; wherein the characteristic information includes a number of lane lines, a type of each lane line, and a relative position relationship between the vehicle to be positioned and each lane line; and

a processing module 502, configured to determine at least one road in a preset area including the current position in a navigation map; determine a probability that the vehicle to be positioned is located in each lane of each road according to the characteristic information of the road ahead; and determine a target road where the vehicle to be positioned is located in according to the probability that the vehicle to be positioned is located in each lane of each road.

Optionally, the processing module 502 includes a first processing module, a second processing module and a third processing module.

The first processing module is configured to determine a reference line in each road according to the probability that the vehicle to be positioned is located in each lane of each road.

The second processing module is configured to determining a probability that the vehicle to be positioned is located in each road according to a distance between the current position of the vehicle to be positioned and each reference line, and an angle difference between a heading angle of a body of the vehicle to be positioned and a heading angle of each road.

The third processing module is configured to determine the target road where the vehicle to be positioned is located in according to the probability that the vehicle to be positioned is located in each road.

Optionally, the third processing module includes a first processing submodule and a second processing submodule.

The first processing submodule is configured to determine a road corresponding to a maximum probability among the probabilities of the road where the vehicle to be positioned is located in.

The second processing submodule is configured to determine the road corresponding to the maximum probability as the target road where the vehicle to be positioned is located in.

Optionally, the first processing module further includes a third processing submodule and a fourth processing submodule.

The third processing submodule is configured to determine an eigenvalue of a left lane line of each lane, where the eigenvalue is used to identify the left lane line.

The fourth processing submodule is configured to determine the reference line in each road according to the eigenvalue of the left lane line of each lane and the probability that the vehicle to be positioned is located in each lane of each road.

Optionally, the fourth processing submodule includes a first processing unit and a second processing unit.

The first processing unit is configured to calculate a product of the eigenvalue of the left lane line of each lane and the probability that the vehicle to be positioned is located in each lane of each road respectively.

The second processing unit is configured to determine the reference line in each road according to the products.

Optionally, the second processing unit is specifically configured to determine, for each road, by taking a leftmost lane line of the road as a reference, a parallel line having a first distance to the leftmost lane line as the reference line, where the first distance is determined according to a sum of the product.

Optionally, the processing module 502 further includes a fourth processing module and a fifth processing module.

The fourth processing module is configured to perform lane lines matching according to the number of the lane lines and the relative position relationship between the vehicle to be positioned and each lane line to obtain a first probability that the vehicle to be positioned is located in each lane of each road.

The fifth processing module is configured to determine the probability that the vehicle to be positioned is located in each lane of each road according to the type of each lane line and the first probability.

Optionally, the fifth processing module includes a fifth processing submodule, a sixth processing submodule and a seventh processing submodule.

The fifth processing submodule is configured to, if the types of the lane lines are all non-road-edge line type, determine the first probability as the probability that the vehicle to be positioned is located in each lane of each road.

The sixth processing submodule is configured to, if there is a lane line among the lane lines that is a road-edge line type, and the characteristic information further includes a distance between the vehicle to be positioned and a road-edge line, determine a second probability that the vehicle to be positioned is located in each lane of each road according to the distance between the vehicle to be positioned and the road-edge line.

The seventh processing submodule is configured to determine the probability that the vehicle to be positioned is located in each lane of each road according to the first probability and the second probability.

The vehicle position determining apparatus provided by the embodiment of the present application can execute the technical solution of the vehicle position determining method in any one of the above mentioned embodiments, and its implementation principle and beneficial effects are similar to the implementation principle and beneficial effects of the vehicle position determining method, which can be referred to in the implementation principle and beneficial effects of the vehicle position determining method, and will not be repeated herein.

According to the embodiment of the present application, the present application further provides an electronic device and a readable storage medium.

According to an embodiment of the present application, the present application further provides a computer program product, including: a computer program, where the computer program is stored in a readable storage medium, at least one processor of an electronic device can read the computer program from the readable storage medium, and the at least one processor executes the computer program to enable the electronic device to execute the solution according to any one of the above embodiments.

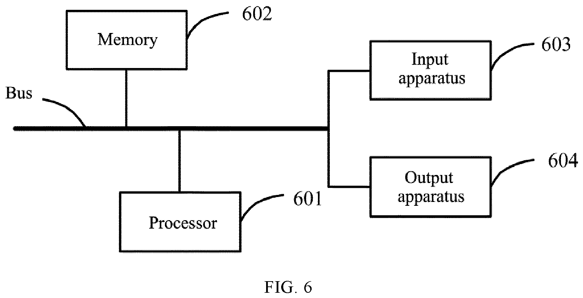

As shown in FIG. 6, it is a block diagram of an electronic device for the vehicle position determining method according to an embodiment of the present application. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. The components shown herein, their connections and relationships, and their functions are merely examples, and are not intended to limit implementations of the present application described and/or claimed herein.

As shown in FIG. 6, the electronic device includes: one or more processors 601, a memory 602, and an interface for connecting components, including a high-speed interface and a low-speed interface. The components are connected to each other via different buses, and can be installed on a public motherboard or installed in other ways as desired. The processor may process instructions executed within the electronic device, including instructions that stored in or on the memory to display GUI graphical information on an external input/output apparatus (such as a display device coupled to the interface). In other embodiments, multiple processors and/or multiple buses can be used together with multiple memories, if desired. Similarly, multiple electronic devices can be connected, and each device provides some necessary operations (for example, as a server array, a group of blade servers, or a multi-processor system). In FIG. 6, one processor 601 is used as an example.

The memory 602 is a non-transitory computer readable storage medium provided in the present application. The memory is stored with instructions executable by at least one processor, enabling at least one processor to execute the vehicle position determining method provided in the present application. The non-transitory computer readable storage medium of the present application is stored with computer instructions, which are configured to enable a computer to execute the vehicle position determining method provided in the present application..

As a non-transitory computer-readable storage medium, the memory 602 can be configured to store non-transitory software programs, non-transitory computer executable programs and modules, such as program instructions/modules corresponding to the vehicle position determining method in the embodiment of the present application (for example, the acquiring module 501 and the processing module 502 shown in FIG. 5). The processor 601 executes various functional applications and data processing of the server by running the non-transitory software programs, instructions, and modules stored in the memory 602, thereby implementing the vehicle position determining method in the foregoing method embodiments.

The memory 602 may include a program storage area and a data storage area, where the program storage area may be stored with an application program required by an operating system and at least one function, the data storage area may be stored with data created according to use of the electronic device for the vehicle position determining method, and the like. In addition, the memory 602 may include a high-speed random access memory, and may also include a non-transitory memory, such as at least one magnetic disk storage device, a flash memory device, or other non-transitory solid-state storage devices. In some embodiments, the memory 602 optionally includes remote memories arranged relative to the processor 601, and these remote memories can be connected to the electronic device for the vehicle position determining method through a network. Examples of the above network include, but are not limited to, Internet, an intranet, a local area network, a mobile communication network, and a combination thereof.

The electronic device for the vehicle position determining method may also include: an input apparatus 603 and an output apparatus 604. The processor 601, the memory 602, the input apparatus 603 and the output apparatus 604 can be connected by a bus or in other ways, in FIG. 6, connections via buses are used as an example.

The input apparatus 603 may receive input digital or character information, and generate key signal input related to user settings and function control of the electronic device for the vehicle position determining method, such as a touch screen, a keypad, a mouse, a trackpad, a touchpad, an indicator bar, one or more mouse buttons, a trackball, a joystick and other input apparatuses. The output apparatus 604 may include a display device, an auxiliary lighting device (e. g., an LED), a tactile feedback device (e. g., a vibration motor), and the like. The display device may include, but is not limited to, a liquid crystal display (LCD), a light emitting diode (LED) display, and a plasma display. In some implementations, the display device may be the touch screen.

Various implementations of the system and the technique described herein may be implemented in a digital electronic circuit system, an integrated circuit system, an ASIC (application specific integrated circuit), a computer hardware, a firmware, a software, and/or a combination thereof. These various implementations may include: implementations implemented in one or more computer programs, where the one or more computer programs may be executed and/or interpreted on a programmable system including at least one programmable processor, and the programmable processor may be a dedicated or generic programmable processor, which may receive data and instructions from a storage system, at least one input apparatus and at least one output apparatus, and transmit the data and the instructions to the storage system, the at least one input apparatus and the at least one output apparatus.

These computer programs (also known as programs, software, software applications, or codes) include machine instructions of the programmable processor, and may be implemented using a high-level process and/or an object-oriented programming language, and/or an assembly/machine language. As used herein, the terms such as "machine readable medium" and "computer readable medium" refer to any computer program product, device, and/or equipment (e.g., a magnetic disk, an optical disk, a memory, a programmable logic device (PLD)) configured to provide machine instructions and/or data to the programmable processor, including a machine readable medium that receives machine instructions as machine readable signals. The term "machine readable signal" refers to any signal configured to provide machine instructions and/or data to the programmable processor.

For provision of interaction with a user, the system and the technique described herein may be implemented on a computer, and the computer has: a display device for displaying information to the user (such as a CRT (cathode ray tube) or an LCD (liquid crystal display) monitor); and a keyboard and a pointing device (such as a mouse or a trackball), the user may provide an input to the computer through the keyboard and the pointing device. Other kinds of devices may also be used to provide the interaction with the user; for example, feedback provided to the user may be any form of sensor feedback (e.g., visual feedback, auditory feedback, or tactile feedback); and may receive the input from the user in any form (including an acoustic input, a voice input, or a tactile input).

The system and the technique described herein may be implemented in a computing system that includes back-end components (for example, as a data server), or a computing system that includes intermediate components (for example, an application server), or a computing system that includes front-end components (for example, a user computer with a graphical user interface or a web browser through which the user may interact with the implementations of the systems and the techniques described herein), or a computing system that includes any combination of the back-end components, the intermediate components, or the front-end components. The components of the system may be interconnected by any form or medium of digital data communications (e.g., a communication network). Examples of the communication network include: a local area network (LAN), a wide area network (WAN), and Internet.

The computer system may include a client and a server. The client and the server are generally far away from each other, and generally interact with each other through the communication network. A relationship between the client and the server is generated by computer programs running on a corresponding computer and having a client-server relationship.

The embodiments of the present application, by acquiring a current position of a vehicle to be positioned and characteristic information of a road ahead of the current position; where the characteristic information includes a number of lane lines, a type of each lane line, and a relative position relationship between the vehicle to be positioned and each lane line; determining at least one road in a preset area including the current position in a navigation map; determining a probability that the vehicle to be positioned is located in each lane of each road according to the characteristic information of the road ahead; and determining a target road where the vehicle to be positioned is located in according to the probability that the vehicle to be positioned is located in each lane of each road, determine the target road where the vehicle to be positioned is located in according to a lane-level probability distribution, which can improve accuracy of positioning to a certain extent and solve a problem in the prior art that the road where the vehicle is currently located in cannot be determined, thereby accurately providing assistance for users to travel.

It should be understood that the various forms of processes shown above can be used, and reordering, addition, or deletion of a step can be performed. For example, the steps recorded in the present application can be executed concurrently, sequentially, or in different orders, provided that desirable results of the technical solutions disclosed in the present application could be achieved, and there is no limitation herein.

The above specific embodiments do not constitute a limitation on the protection scope of the present application. Those skilled in the art should understand that various modifications, combinations, sub-combinations, and replacements can be made according to design requirements and other factors. Any modification, equivalent replacement and improvement made within the principle of the present application shall be included in the protection scope of the present application.

**Claims**

1. A vehicle position determining method, comprising:

   acquiring (S201) a current position of a vehicle to be positioned and characteristic information of a road ahead of the current position; wherein the characteristic information comprises a number of lane lines, a type of each lane line, and a relative position relationship between the vehicle to be positioned and each lane line;
   determining (S202) at least one road in a preset area comprising the current position in a navigation map;
   determining (S203) a probability that the vehicle to be positioned is located in each lane of each road according to the characteristic information of the road ahead; and
   determining (S204) a target road where the vehicle to be positioned is located in according to the probability that the vehicle to be positioned is located in each lane of each road.

2. The method according to claim 1, wherein the determining a target road where the vehicle to be positioned is located in according to the probability that the vehicle to be positioned is located in each lane of each road comprises:

determining a reference line in each road according to the probability that the vehicle to be positioned is located in each lane of each road;

determining a probability that the vehicle to be positioned is located in each road according to a distance between the current position of the vehicle to be positioned and each reference line, and an angle difference between a heading angle of a body of the vehicle to be positioned and a heading angle of each road; and

determining the target road where the vehicle to be positioned is located in according to the probability that the vehicle to be positioned is located in each road.

3. The method according to claim 2, wherein the determining the target road where the vehicle to be positioned is located in according to the probability that the vehicle to be positioned is located in each road comprises:

determining a road corresponding to a maximum probability among the probabilities of the road where the vehicle to be positioned is located in; and

determining the road corresponding to the maximum probability as the target road where the vehicle to be positioned is located in.

4. The method according to claim 2, wherein the determining a reference line in each road according to the probability that the vehicle to be positioned is located in each lane of each road comprises:

determining an eigenvalue of a left lane line of each lane, wherein the eigenvalue is used to identify the left lane line; and

determining the reference line in each road according to the eigenvalue of the left lane line of each lane and the probability that the vehicle to be positioned is located in each lane of each road.

5. The method according to claim 4, wherein the determining the reference line in each road according to the eigenvalue of the left lane line of each lane and the probability that the vehicle to be positioned is located in each lane of each road comprises:

calculating a product of the eigenvalue of the left lane line of each lane and the probability that the vehicle to be positioned is located in each lane of each road respectively; and

determining the reference line in each road according to the products.

6. The method according to claim 5, wherein the determining the reference line in each road according to the products comprises:

determining, for each road, by taking a leftmost lane line of the road as a reference, a parallel line having a first distance to the leftmost lane line as the reference line, wherein the first distance is determined according to a sum of the products.

7. The method according to any one of claims 1-6, wherein the determining a probability that the vehicle to be positioned is located in each lane of each road according to the characteristic information of the road ahead comprises:

performing lane lines matching according to the number of the lane lines and the relative position relationship between the vehicle to be positioned and each lane line to obtain a first probability that the vehicle to be positioned is located in each lane of each road; and

determining the probability that the vehicle to be positioned is located in each lane of each road according to the type of each lane line and the first probability.

8. The method according to claim 7, wherein the determining the probability that the vehicle to be positioned is located in each lane of each road according to the type of each lane line and the first probability comprises:

if the types of the lane lines are all non-road-edge line type, determining the first probability as the probability that the vehicle to be positioned is located in each lane of each road;

if there is a lane line among the lane lines that is a road-edge line type, and the characteristic information further comprises a distance between the vehicle to be positioned and a road-edge line, determining a second probability that the vehicle to be positioned is located in each lane of each road according to the distance between the vehicle to be positioned and the road-edge line; and

determining the probability that the vehicle to be positioned is located in each lane of each road according to the first probability and the second probability.

9. A vehicle position determining apparatus, comprising:

an acquiring module (501), configured to acquire a current position of a vehicle to be positioned and characteristic information of a road ahead of the current position; wherein the characteristic information comprises a number of lane lines, a type of each lane line, and a relative position relationship between the vehicle to be positioned and each lane line; and
a processing module (502), configured to determine at least one road in a preset area comprising the current position in a navigation map; determine a probability that the vehicle to be positioned is located in each lane of each road according to the characteristic information of the road ahead; and determine a target road where the vehicle to be positioned is located in according to the probability that the vehicle to be positioned is located in each lane of each road.

10. An electronic device, comprising:

at least one processor (601); and
a memory (602) communicatively connected to the at least one processor (601); wherein,
the memory (602) stores with instructions executable by the at least one processor (601), and the instructions are executed by the at least one processor (601) to enable the at least one processor (601) to execute the vehicle position determining method according to any one of claims 1-8.

11. A non-transitory computer readable storage medium storing with computer instructions, wherein the computer instructions are used to cause a computer to execute the vehicle position determining method according to any one of claims 1-8.

12. A computer program product, comprising a computer program, which, when executed by a processor, executes the vehicle position determining method according to any one of claims 1-8.

FIG. 1

```
                                                                  ⌐ S201
┌────────────────────────────────────────────────────────┐
│                                                          │
│     Acquire a current position of a vehicle to be        │
│   positioned and characteristic information of a road    │
│   ahead of the current position; where the characteristic│
│   information includes a number of lane lines, a type    │
│   of each lane line, and a relative position relationship │
│       between the vehicle to be positioned and each      │
│                        lane line                         │
└────────────────────────────────────────────────────────┘
                            │
                            │                      ⌐ S202
                            ▼
┌────────────────────────────────────────────────────────┐
│                                                          │
│           Determine at least one road in a preset area   │
│         including the current position in a navigation map│
│                                                          │
└────────────────────────────────────────────────────────┘
                            │
                            │                     ⌐ S203
                            ▼
┌────────────────────────────────────────────────────────┐
│                                                          │
│   Determine a probability that the vehicle to be         │
│   positioned is located in each lane of each road        │
│   according to the characteristic information            │
│                 of the road ahead                        │
└────────────────────────────────────────────────────────┘
                            │
                            │                     ⌐ S204
                            ▼
┌────────────────────────────────────────────────────────┐
│                                                          │
│   Determine a target road where the vehicle to be        │
│   positioned is located in according to the probability  │
│   that the vehicle to be positioned is located in each   │
│                  lane of each road                       │
└────────────────────────────────────────────────────────┘
```

FIG. 2

FIG. 3

FIG. 4

50

Vehicle position determining apparatus

501

Acquiring module

502

Processing module

First processing module

Second processing module

Third processing module

Fourth processing module

Fifth processing module

FIG. 5

FIG. 6